# FASCICULE DE BREVET EUROPEEN

(11) **EP 1 729 560 B1**
(45) Date de publication et mention de la délivrance du brevet: **22.08.2012**
(21) Numéro de dépôt: 05716967.4
(22) Date de dépôt: 09.03.2005
(51) Int. Cl.: A01G 9/14

(54) **SERRE PERFECTIONNEE INTEGRANT DES MOYENS DE RECUPERATION ET DE CANALISATION DE L'EAU DE CONDENSATION**
VERBESSERTES GEWÄCHSHAUS MIT KONDENSATRÜCKGEWINNUNG UND ROHRLEITUNGSMITTELN
IMPROVED GREENHOUSE COMPRISING CONDENSATE RECOVERY AND PIPING MEANS

(30) Priorité: 09.03.2004 FR 0402459
(43) Date de publication de la demande: 13.12.2006
(73) Titulaire: Etablissement Barre S.A.S., F-47320 Clairac (FR); Barre, Andrè, 47320 Clairac (FR)
(72) Inventeur: BARRE, André, F-47320 Clairac (FR)
(74) Mandataire: Ravina, Bernard
(86) Numéro de dépôt international: PCT/EP2005/051047
(87) Numéro de publication internationale: WO 2005/096802

(56) Documents cités:
- WO-A-00/25571
- US-A- 4 170 810
- US-A- 4 472 862
- US-A- 5 197 238

## Description

La présente invention est relative à une serre perfectionnée, intégrant des moyens de récupération, de canalisation et d'évacuation vers l'extérieur de l'eau déposée sous forme de gouttes sur la face interne de la paroi transparente de couverture de la serre, par condensation de l'humidité présente dans l'atmosphère interne de la serre.

La demande de brevet américaine US-A-5 179 238 décrit une serre selon le préambule de la revendication 1. Typiquement une serre à usage agricole est constituée d'une ossature métallique et d'une bâche de couverture posée sur cette armature. L'armature de la serre est généralement constituée par plusieurs arceaux verticaux espacés les uns des autres fixés rigidement au sol et réunis les uns aux autres par une ou plusieurs lisses horizontales, parallèles à l'axe longitudinal de la serre. La bâche est habituellement constituée par une feuille souple en matière synthétique. Cette bâche est transparente à la lumière et à l'infrarouge proche de la lumière solaire, et opaque à l'infrarouge lointain émis par le sol afin de créer l'effet de serre.

Le tunnel de la serre peut être doté d'au moins un ouvrant latéral manoeuvrable depuis l'intérieure de la serre, soit pour dégager, soit pour masquer une ouverture latérale d'aération de la serre. Cet ouvrant est habituellement formé d'une ossature d'ouvrant articulée à l'ossature de la serre, cette ossature d'ouvrant étant recouverte par la bâche. En dessous de l'ouverture d'aération, l'ossature de serre reçoit un second pan de bâche. Habituellement l'ossature d'ouvrant est articulée à la lisse sommitale de l'ossature de la serre.

L'ossature d'ouvrant est typiquement constituée par des traverses cintrées articulées à la lisse sommitale de la serre et par une lisse horizontale fixées aux traverses cintrées. Cette lisse est montée en extrémité libre des traverses cintrées et reçoit en fixation le pan de bâche.

Un des problèmes typiques des serres connues est la formation d'eau de condensation sur la face interne de la bâche. Cette eau de condensation se présente sous la forme de gouttelettes qui se déplacent sur la surface interne de la bâche sous l'effet de leur poids. Ces gouttelettes sont bloquées dans leur progression par les lisses horizontales et à ce niveau en grossissant ne peuvent plus se maintenir au contact de la bâche et s'écoulent vers le sol. Ainsi il est fréquent que les cultures, au droit des rejets d'eau que constituent les lisses, présentent des croissances irrégulières ou un état sanitaire fortement dégradé en raison de cet apport d'eau supplémentaire. Par ailleurs l'eau de condensation au contact des lisses attaque le revêtement protecteur de ces dernières, ce qui se traduit par des points de rouilles.

La présente invention a pour objet de pallier les inconvénients précédemment évoqués en proposant des moyens pour récupérer, canaliser et évacuer vers l'extérieur l'eau de condensation formée sur la face interne de la bâche de la serre.

À cet effet, la serre selon l'invention, du genre tunnel comportant, une part, une ossature comprenant notamment des arceaux verticaux et une lisse sommitale fixée aux dits arceaux et, d'autre part, au moins une bâche de couverture montée en tension sur les arceaux de l'ossature entre deux éléments longilignes de fixation et de maintien en tension auxquels elle est solidarisée, chaque élément de maintien en tension étant solidaire de l'ossature et comportant au moins un profilé coopérant en fixation avec la bâche, lequel profilé présente une face interne à la serre transversale à la bâche et une face externe à la serre, se caractérise essentiellement en ce que ledit profilé présent, entre la face interne à la serre et la face externe, un ou plusieurs passage(s) traversant(s) d'évacuation de l'eau de condensation.

Ainsi l'eau de condensation ne s'accumule plus dans la serre et peut s'évacuer d'elle-même vers l'extérieur. Cependant ces passages traversants peuvent être empruntés par des insectes nuisibles pour les plantes cultivées dans la serre. Pour cette raison, selon une autre caractéristique de l'invention, le ou les passage(s) traversant(s) est ou sont équipé(s) d'un élément poreux permettant le passage de l'eau, de l'air et de la vapeur d'eau mais constituant obstacle au passage des insectes.

Selon une autre caractéristique de l'invention, le profilé destiné à coopérer en fixation avec la bâche, de l'élément de maintien en tension de la bâche, présente une section droite en forme de U avec ailes latérales recourbées vers l'intérieur, ledit élément de maintien en tension comportant en outre un deuxième élément profilé de section droite en U, présentant deux ailes et une âme, destiné à être introduit dans le précédent, la bâche étant prise entre ces deux profilés et ledit élément de fixation de la bâche comportant un troisième profilé formant clé destiné à être introduit en force dans le deuxième profilé de façon que ce dernier ne puisse pas être extrait du premier sous l'effet de l'effort de tension de la bâche.

Préférentiellement, selon une autre caractéristique de l'invention, le profilé constituant clé est tubulaire.

Selon une autre caractéristique de l'invention, le profilé tubulaire formant clé présente une cloison interne transversale. Cette cloison a essentiellement un rôle de renfort et évite l'écrasement du profilé sur lui-même.

Selon une forme préférée d'exécution, le second profilé présente sur ses ailes deux épaulements opposés, externes prévus pour venir chacun, lors de l'engagement du deuxième profilé dans le premier, sous la courbure de l'aile correspondante du premier profilé. Cette disposition assure le blocage du second profilé dans le premier.

Pour faciliter son introduction dans le premier profilé, le second profilé, au niveau de l'enracinement de chacune des ailes à l'âme, présente sur son intrados une zone de pliure.
Cette disposition lors de l'introduction du profilé dans le premier profilé facilite le pincement des ailes et par voie de conséquence le passage des renflements que forment les deux épaulements.

Pour encore faciliter l'introduction du deuxième profilé dans le premier, l'âme du deuxième profilé en zone centrale présente sur son intrados une gorge longitudinale de pliure de section droite triangulaire.

Selon une forme préférée d'exécution chaque zone de pliure est constituée par une gorge longitudinale de section droite triangulaire.

Selon une forme préférée d'exécution, les passages traversants sont constitués par des perçages formés dans chacune des ailes du premier profilé et par le volume interne défini par les ailes et l'âme de ce profilé.

L'élément poreux s'opposant à l'introduction des insectes est introduit, selon une forme préférée d'exécution dans le volume interne défini par les ailes et l'âme du premier profilé.

Les aménagements tels que décrits sont applicables aussi bien à une serre mono-tunnel qu'à une serre multi-tunnel. Ainsi pour une serre comportant plusieurs tunnels entre lesquels sont disposés des chéneaux présentant deux ailes latérales, l'une au moins des ailes latérales de chaque chéneau reçoit en fixation un élément de maintien en tension de bâche.

Pour une serre comportant plusieurs tunnels entre lesquels sont disposés des chéneaux présentant chacun deux ailes latérales, et dont chaque tunnel présente une ouverture latérale d'aération associée à un ouvrant comportant une armature articulée à l'ossature du tunnel, recouverte par la bâche et constituée par des traverses cintrées articulées à l'ossature de la serre et par une lisse horizontale terminale fixées en extrémité libre des traverses cintrées, ledit ouvrant en position de fermeture prenant appui par la lisse terminale de son armature sur l'aile latérale correspondante du chéneau, l'invention prévoit que l'un des éléments de maintien en tension de la bâche soit fixé sur la lisse terminale de l'ouvrant.

D'autres avantages et caractéristiques de l'invention apparaîtront à lecture de la description d'une forme préférée de réalisation donnée à titre d'exemple non limitatif en se référant aux dessins annexés en lesquels:

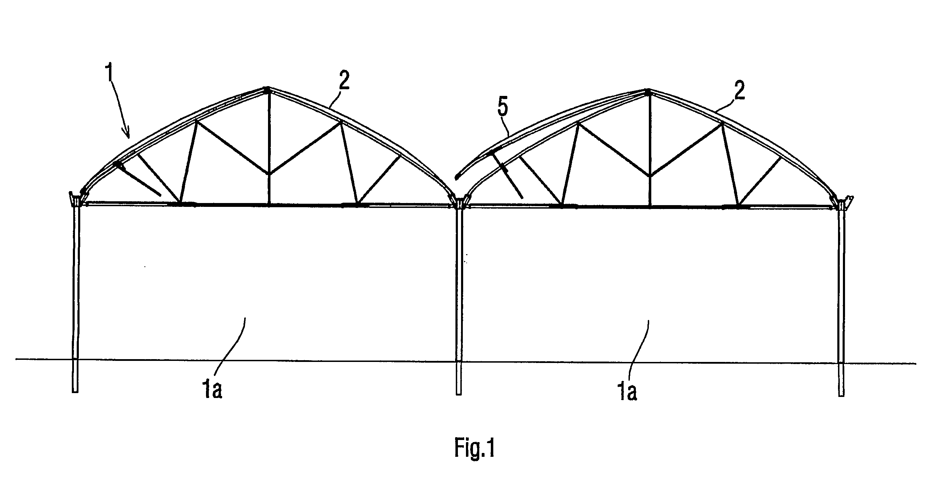

- la figure 1 montre vue de face une serre multi-tunnels,

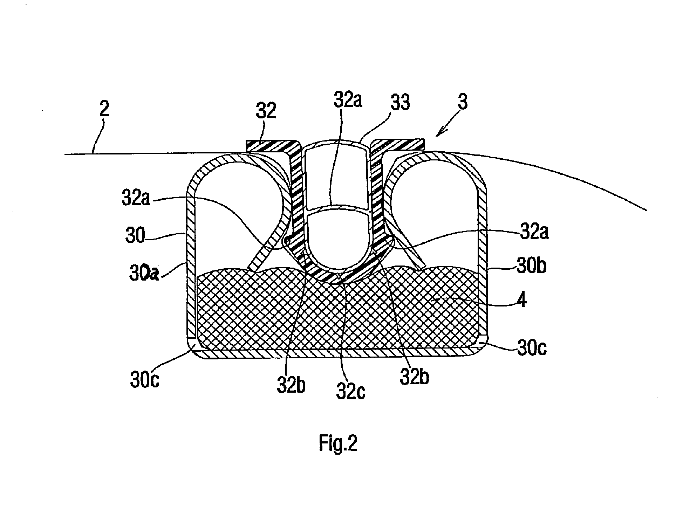

- la figure 2 montre vue en coupe un élément de fixation et de maintien en tension de la bâche de couverture,

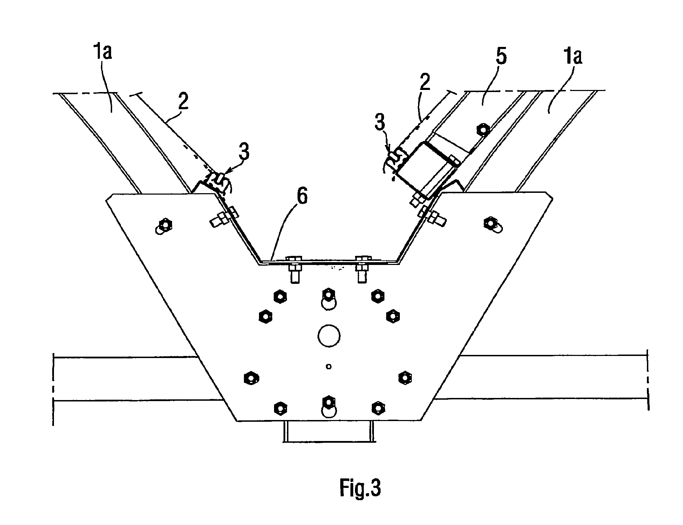

- la figure 3 est une vue agrandie de détail de la figure 1.

Telle que représentée la serre 1 du genre tunnel selon l'invention comporte une ossature formée notamment par des arceaux verticaux fixés au sol et par une lisse sommitale fixée par brides ou autres moyens aux dits arceaux. Cette ossature sert de support à au moins une bâche 2 de couverture se présentant sous la forme d'une feuille d'une matière synthétique transparente à la lumière. Cette bâche 2 est montée en tension sur les arceaux de l'ossature entre deux éléments longilignes 3 de fixation et maintien en tension auxquels elle est solidarisée, chaque élément de maintien en tension étant solidaire de l'ossature de la serre et comportant au moins un profilé 30 coopérant en fixation avec la bâche 2, lequel profilé 30 présente une face interne 30a à la serre, c'est-à-dire tournée vers le volume interne de la serre cette face étant transversale à la bâche 2 et une face 30b externe à la serre, c'est-à-dire tournée vers l'extérieur de la serre. Conformément à l'invention, le profilé 30 de chaque élément 3 de maintien en tension présente entre la face 30a interne à la serre et la face 30b externe un ou plusieurs passages traversants 30c d'évacuation de l'eau de condensation.

Comme on peut le voir sur les figures jointes, le profilé 30 de l'élément 3 de fixation et de maintien en tension présente une section droite en forme de U et comprend deux ailes latérales et une âme. Les deux ailes latérales sont recourbées en arc de circonférence de cercle vers l'intérieur du profilé et forment, dans ce dernier, deux saillies longitudinales. Ce profilé 30 est préférentiellement métallique.

L'élément 3 de fixation et de maintien en tension comporte de plus un deuxième élément profilé 32 de section droite en U, présentant deux ailes et une âme, destiné à être introduit dans le précédent, la bâche 2 étant enserrée entre ces deux profilés 30, 32 et plus précisément entre l'extrados du second profilé 32 et la partie recourbée de chaque aile latérale du premier profilé 30. Pour éviter d'endommager la bâche 2, l'âme du second profilé 32 est arrondie vers l'extérieur. Pour être bloqué dans le premier profilé 30, le deuxième profilé 32 présente sur ses ailes, deux épaulements longitudinaux opposés 32a, externes, prévus pour venir chacun lors de l'engagement du deuxième profilé dans le premier, sous la courbure de l'aile correspondante du premier profilé 30. On réalise ainsi un clipsage du deuxième profilé 32 dans le premier. Préférentiellement, ce second profilé est réalisé en une matière synthétique présentant un degré de dureté moindre que celui de la matière constitutive du premier profilé 30.

Par rapprochement des ailes latérales du deuxième profilé 32 l'une de l'autre, ce dernier peut être extrait du premier. Ce rapprochement peut être induit par les efforts appliqués par le premier profilé 30 sur les épaulements longitudinaux 32a par le premier profilé 30 sous l'effet de la tension de la bâche 2. Pour éviter toute extraction inopinée du deuxième profilé 32, l'élément 3 de fixation et de maintien en tension est doté d'un troisième profilé 33 formant clé, destiné à être introduit en force dans le deuxième profilé de façon à interdire le rapprochement des ailes latérales de ce dernier. Ce troisième profilé 33, de préférence tubulaire, est réalisé en matière synthétique.

Comme on peut le voir, le profilé tubulaire 33 constituant clé présente une section droite sensiblement oblongue définie par deux côtés rectilignes convergents, opposés et par deux côtés arrondis vers l'extérieur, opposés, s'étendant entre les côtés rectilignes. La forme conique que confère au profilé 33 la convergence des deux côtés convergents de la section droite à pour but de faciliter l'introduction de la clé 33 dans le deuxième profilé 32. Les flancs latéraux du profilé 33 c'est-à-dire les flancs correspondant aux deux côtés rectilignes de la section droite, sont destinés à venir au contact des ailes latérales du deuxième profilé 32.

Pour éviter qu'il ne se déforme sous l'effet des sollicitations d'écrasement exercées par les ailes du second profilé 32 lorsque ces dernières sont elles-mêmes sollicitées l'une vers l'autre en raison de la tension de la bâche 2, le profilé tubulaire 33 formant clé présente une cloison interne transversale 33a s'étendant d'un flanc latéral à l'autre.

Le deuxième profilé 32, au niveau de l'enracinement de chacune des ailes à l'âme, présente sur son intrados, une zone de pliure 32b constituée par exemple par une gorge longitudinale qui peut présenter une section droite triangulaire. Cette gorge longitudinale est disposée sous et à distance de l'épaulement longitudinal 32a. Cette disposition à pour effet de faciliter le rapprochement angulaire des deux ailes du profilé 32 et par voie de conséquence l'introduction ou le retrait de ce deuxième profilé 32 dans et hors du premier profilé 30.

Pour encore faciliter ce rapprochement angulaire, l'âme du deuxième profilé 32 en zone centrale présente sur son intrados une zone de pliure 32c constituée par exemple par une gorge longitudinale qui peut présenter comme précédemment une section droite triangulaire.

Selon la forme préférée de réalisation le premier profilé 30 présente plusieurs passages traversants équirépartis 30c.

Toujours selon la forme préférée de réalisation, chaque passage traversant 30c est constitué par un perçage formé dans chacune des ailes du premier profilé 31 et par le volume interne défini par ce profilé, les deux perçages 30c formés dans les deux ailes étant axialement alignés et étant formés à faible distance de l'âme.

Pour éviter que des insectes nuisibles ou vecteurs de maladies ne puissent s'introduire dans la serre 1 par ces passages traversants 30c, ces derniers sont équipés d'un élément poreux 4 permettant le passage de l'eau, de l'air et de la vapeur d'eau mais constituant obstacle au passage des insectes. L'élément poreux 4 est préférentiellement commun à tous les passages 30c et sera introduit dans le volume interne du profilé 30.

L'élément poreux 4 peut être constitué par une feuille d'un matériau poreux ou par une mousse coulée dans le profilé 30. Il est bien évident que le second profilé 32 et la bâche 2, une fois en place dans le premier profilé 30, demeurent écartés de la face intrados de l'âme de ce premier profilé 30 pour ne pas constituer obstacle à l'écoulement de l'eau de condensation.

S'agissant d'une serre comportant plusieurs tunnels 1a entre lesquels sont disposés des chéneaux 6 présentant deux ailes latérales, l'une au moins des ailes latérales de chaque chéneau 6 recevra en fixation un élément 3 de fixation et de maintien en tension de bâche 2.

Habituellement chaque tunnel 1a présente une ouverture latérale d'aération associée à un ouvrant 5 comportant une armature articulée à l'ossature du tunnel et recouverte par la bâche 2. L'armature de l'ouvrant 5 est constituée par des traverses cintrées articulées à l'ossature du tunnel 1a, par exemple à la lisse sommitale et par une lisse horizontale terminale fixées en extrémité libre des traverses cintrées. En position de fermeture l'ouvrant 5 prend appui par la lisse terminale de son armature sur l'aile latérale correspondante du chéneau 6. La lisse terminale de l'ouvrant reçoit avantageusement l'un des éléments 3 de fixation et de maintien en tension de la bâche 2.

Ainsi chaque bâche 2 par l'un des deux éléments 3 de fixation et de maintien en tension est fixée à la lisse terminale de l'ouvrant 5 et par l'autre élément 3 de fixation et de maintien en tension est fixée à l'aile latérale du chéneau 6 correspondant.

Il va de soi que la présente invention peut recevoir tous aménagements et variantes du domaine des équivalents techniques sans pour autant sortir du cadre du présent brevet , tel que défini dans les revendications.

## Revendications

1. Serre (1) du genre tunnel comportant d'une part une ossature comprenant notamment des arceaux verticaux et une lisse sommitale fixée aux dits arceaux et d'autre part au moins une bâche (2) de couverture montée en tension sur les arceaux de l'ossature entre deux éléments longilignes (3) de fixation et de maintien en tension auxquels elle est solidarisée, chaque élément de maintien en tension étant solidaire de l'ossature et comportant au moins un profilé (30) coopérant en fixation avec la bâche (2), lequel profilé (30) présente une face (30a) interne à la serre, transversale à la bâche (2), et une face (30b) externe à la serre **caractérisée en ce que** ledit profilé (30) présente entre la face (30a) interne à la serre et la face (30b) externe un ou plusieurs passages traversants (30c) d'évacuation de l'eau de condensation.

2. Serre selon la revendication 1, **caractérisée en ce que** le profilé (30) de l'élément (3) de maintien en tension de la bâche (2) présente une section droite en forme de U avec ailes latérales recourbées vers l'intérieur, ledit élément de maintien en tension comportant en outre un deuxième élément profilé (32) de section droite en U, présentant deux ailes et une âme, destiné à être introduit dans le précédent, la bâche(2) étant prise entre ces deux profilés (30, 32) et ledit élément de fixation (3) de la bâche comportant un troisième profilé (33) formant clé, destiné à être introduit en force dans le deuxième profilé (32) de façon que ce dernier ne puisse pas être extrait du premier sous l'effet de l'effort de tension de la bâche (2).

3. Serre selon la revendication 2, **caractérisée en ce que** le profilé (33) constituant clé est tubulaire.

4. Serre selon la revendication 3, **caractérisée en ce que** le profilé tubulaire (33) constituant clé présente une section droite définie par deux côtés rectilignes convergents, opposés et par deux côtés arrondis vers l'extérieur, opposés s'étendant entre les côtés rectilignes.

5. Serre selon la revendication 3 ou la revendication 4, **caractérisée en ce que** le profilé tubulaire (33) formant clé présente une cloison interne (33a) transversale.

6. Serre selon l'une quelconque des revendications 2 à 5, **caractérisée en ce que** le deuxième profilé (32) présente sur ses ailes deux épaulements opposés (32a), externes, prévus pour venir chacun lors de l'engagement du deuxième profilé (32) dans le premier profilé (30), sous la courbure de l'aile correspondante dudit premier profilé (30), chacun de ces épaulements (32a) étant situé à distance de la zone d'enracinement de l'aile qui le porte à l'âme.

7. Serre selon l'une quelconque des revendications 2 à 6, **caractérisée en ce que** l'âme du second profilé (32) est arrondie vers l'extérieur.

8. Serre selon l'une quelconque des revendications 2 à 7, **caractérisée en ce que** le deuxième profilé (32) au niveau de l'enracinement de chacune des ailes à l'âme présente sur son intrados une zone de pliure (32b).

9. Serre selon l'une quelconque des revendications 2 à 8, **caractérisée en ce que** l'âme du deuxième profilé (32), en zone centrale, présente sur son intrados une zone de pliure (32c).

10. Serre selon l'une quelconque des revendications 2 à 9, **caractérisée en ce que** le ou les passage(s) traversant(s) (30c) est ou sont constitué(s) par des perçages formés dans chacune des ailes du premier profilé (31) et par le volume interne défini par les ailes et l'âme de ce profilé (31).

11. Serre (1) selon l'une quelconque des revendications précédentes, **caractérisée en ce que** le ou les passage(s) traversant(s) (30c) est ou sont équipé(s) d'un élément poreux (4) permettant le passage de l'eau, de l'air et de la vapeur d'eau mais constituant obstacle au passage des insectes.

12. Serre selon les revendications 10 et 11 prises ensemble, **caractérisée en ce que** l'élément poreux est introduit dans le volume interne défini par les ailes et l'âme du premier profilé.

13. Serre (1) selon l'une quelconque des revendications précédentes, comportant plusieurs tunnels (1a) entre lesquels sont disposés des chéneaux (6) présentant deux ailes latérales, **caractérisée en ce que** l'une au moins des ailes latérales de chaque chéneau (6) reçoit en fixation un élément (3) de maintien en tension de bâche (2).

14. Serre (1) selon l'une quelconque des revendications précédentes comportant plusieurs tunnels (1a) entre lesquels sont disposés des chéneaux (6) présentant deux ailes latérales, et dont chaque tunnel (1a) présente une ouverture latérale d'aération associée à un ouvrant (5) comportant une armature articulée à l'ossature du tunnel, ladite armature étant recouverte par la bâche (2) et étant constituée par des traverses cintrées articulées à l'ossature du tunnel (1a) et par une lisse horizontale terminale fixées en extrémité libre des traverses cintrées, ledit ouvrant (5) en position de fermeture prenant appui par la lisse terminale de son armature sur l'aile latérale correspondante du chéneau (6), **caractérisée en ce que** l'un des éléments (3) de fixation et de maintien en tension de la bâche (2) est fixé sur la lisse terminale de l'ouvrant (5).

## Claims

1. A greenhouse (1) of the tunnel type, comprising firstly a framework comprising in particular vertical arches and a top rail fixed to said arches and secondly at least one covering awning (2) mounted under tension on the arches of the framework between two slender elements (3) for fixing and holding under tension to which it is secured, each element for holding under tension being secured to the framework and comprising at least one profile (30) cooperating fixedly with the awning (2), said profile (30) having a face (30a) internal to the greenhouse, transverse to the awning (2), and a face (30b) external to the greenhouse, **characterised in that** said profile (30) has, between the face (30a) internal to the greenhouse and the external face (30b), one or more through passages (30c) for discharging condensation water.

2. A greenhouse according to claim 1, **characterised in that** the profile (30) of the element (3) for holding the awning (2) under tension has a cross section in the form of a U with lateral flanges curved inwards, said element for holding under tension also comprising a second profiled element (32) with a U-shaped cross section, having two flanges and a web, intended to be introduced into the previous one, the awning (2) being gripped between these two profiles (30, 32) and said element (3) fixing the awning comprising a third profile (33) forming a key, intended to be forcibly introduced into the second profile (32) so that the latter cannot be extracted from the first under the effect of the tension force of the awning (2).

3. A greenhouse according to claim 2, **characterised in that** the profile (33) constituting a key is tubular.

4. A greenhouse according to claim 3, **characterised in that** the tubular profile (33) constituting a key has a cross section defined by two opposite convergent rectilinear sides and by two opposite outwardly rounded sides extending between the rectilinear sides.

5. A greenhouse according to claim 3 or claim 4, **characterised in that** the tubular profile (33) forming a key has a transverse internal partition (33a).

6. A greenhouse according to any one of claims 2 to 5, **characterised in that** the second profile (32) has on its flanges two external opposite shoulders (32a), designed each to come, when the second profile (32) is engaged in the first profile (30), under the curvature of the corresponding flange of said first profile (30), each of these shoulders (32a) being situated at a distance from the area where the flange that carries it is based on the web.

7. A greenhouse according to any one of claims 2 to 6, **characterised in that** the web of the second profile (32) is rounded outwards.

8. A greenhouse according to any one of claims 2 to 7, **characterised in that** the second profile (32) at the place where each of the flanges is based on the web has a folding area (32b) on its lower surface.

9. A greenhouse according to any one of claims 2 to 8, **characterised in that** the web of the second profile (32), in the central area, has a folding area (32c) on its lower surface.

10. A greenhouse according to any one of claims 2 to 9, **characterised in that** the through passage or passages (30c) comprises or comprise piercings formed in each of the flanges of the first profile (31) and by the internal space defined by the flanges and the web of this profile (31).

11. A greenhouse (1) according to any one of the preceding claims, **characterised in that** the through passage or passages (30c) is or are equipped with a porous element (4) enabling water, air and water vapour to pass but constituting an obstacle to the passage of insects.

12. A greenhouse according to claims 10 and 11 taken together, **characterised in that** the porous element is introduced into the internal space defined by the flanges and the web of the first profile.

13. A greenhouse (1) according to any one of the preceding claims, comprising several tunnels (1a) between which gutters (6) having two lateral flanges are arranged, **characterised in that** at least one of the lateral flanges of each gutter (6) receives fixedly an element (3) for holding the awning (2) under tension.

14. A greenhouse (1) according to any one of the preceding claims, comprising several tunnels (1a) between which gutters (6) having two lateral flanges are arranged, and each tunnel (1a) of which has a lateral ventilation opening associated with an opening panel (5) comprising a frame hinged on the framework of the tunnel, said frame being covered by the awning (2) and being formed by curved crossmembers hinged on the framework of the tunnel (1a) and by an end horizontal rail fixed at the free end of the curved crossmembers, said opening panel (5) in the closed position bearing through the end rail of its framework on the corresponding lateral flange of the gutter (6), **characterised in that** one of the elements (3) for fixing and holding the awning (2) under tension is fixed to the end rail of the opening panel (5).

## Patentansprüche

1. Tunnelartiges Gewächshaus (1) umfassend einerseits ein Gestell, das insbesondere vertikale Bögen und eine daran befestigte Dachstrebe umfasst, und andererseits mindestens eine Abdeckplane (2), die unter Spannung auf den Gestellbögen zwischen zwei Langbauteilen (3) zum Befestigen und zum Aufrechterhalten der Spannung angebracht ist, mit denen sie fest verbunden ist, wobei jedes Langbauteil zum - Aufrechterhalten der Spannung fest mit dem Gestell verbunden ist und mindestens ein mit der Plane (2) befestigend zusammenwirkendes Profilteil (30) umfasst, welches eine quer zur Plane (2) angeordnete Gewächshausinnenseite (30a) sowie eine Gewächshausaußenseite (30b) aufweist, **dadurch gekennzeichnet, dass** das Profilteil (30) zwischen der Gewächshausinnenseite (30a) und der Außenseite (30b) einen oder mehrere Durchgänge (30c) für eine Kondenswasserabfuhr aufweist.

2. Gewächshaus nach Anspruch 1, **dadurch gekennzeichnet, dass** das Profilteil (30) des Langbauteils (3) zum Aufrechterhalten der Spannung der Plane (2) einen geraden Abschnitt in U-Form mit nach innen gekrümmten seitlichen Flügeln aufweist, wobei das Langbauteil zum Aufrechterhalten der Spannung unter anderem ein zweites Profilteil (32) mit einem geraden Abschnitt in U-Form zum Einführen in das Erste aufweist, welches zweite Profilteil zwei Flügel und einen Steg aufweist, wobei die Plane (2) zwischen den beiden Profilteilen (30,32) gehalten ist und das Langbauteil (3) zum Befestigen der Plane ein drittes Profilteil (33) umfasst, welches einen Schlüssel bildet und dafür vorgesehen ist, unter Kraftaufwand in das zweite Profilteil (32) eingeführt zu werden, sodass dieses nicht unter dem Einfluss der Spannkraft der Plane (2) aus dem Ersten entweichen kann.

3. Gewächshaus nach Anspruch 2, **dadurch gekennzeichnet, dass** das einen Schlüssel bildende Profilteil (33) rohrförmig ist.

4. Gewächshaus nach Anspruch 3, **dadurch gekennzeichnet, dass** das einen Schlüssel bildende Profilteil (33) einen geraden Abschnitt aufweist, der durch zwei geradlinige, konvergierende, gegenüberliegende Seiten definiert ist, die an zwei Seiten nach außen abgerundet sind, gegenüberliegen und sich zwischen den geradlinigen Seiten erstrecken.

5. Gewächshaus nach Anspruch 3 oder Anspruch 4, **dadurch gekennzeichnet, dass** das einen Schlüssel bildende Profilteil (33) eine interne Trennwand (33a) in Querrichtung aufweist.

6. Gewächshaus nach einem der Ansprüche 2 bis 5, **dadurch gekennzeichnet, dass** das zweite Profilteil (32) an seinen Flügeln zwei gegenüberliegende, externe Absätze (32a) aufweist, welche dazu dienen, dass während des Eingriffs des zweiten Profilteils (32) in das erste Profilteil (30) jeder von ihnen unterhalb der Rundung des entsprechenden Flügels des ersten Profilteils (30) zu liegen kommt, wobei jeder dieser Absätze (32a) in Abstand zum Ansatzbereich des Flügels angeordnet ist, welcher den Flügel am Steg hält.

7. Gewächshaus nach einem der Ansprüche 2 bis 6, **dadurch gekennzeichnet, dass** der Steg des zweiten Profilteils (32) nach außen abgerundet ist.

8. Gewächshaus nach einem der Ansprüche 2 bis 7, **dadurch gekennzeichnet, dass** das zweite Profilteil (32) auf Höhe des Ansatzes jedes der Flügel am Steg auf seiner Innenseite eine Faltzone (32b) aufweist.

9. Gewächshaus nach einem der Ansprüche 2 bis 8, **dadurch gekennzeichnet, dass** der Steg des zweiten Profilteils (32) im mittleren Bereich auf seiner Innenseite eine Faltzone (32b) aufweist.

10. Gewächshaus nach einem der Ansprüche 2 bis 9, **dadurch gekennzeichnet, dass** der Durchgang bzw. die Durchgänge (30c) durch Bohrungen, welche in jedem der Flügel des ersten Profilteils (31) eingebracht sind, sowie durch das durch die Flügel und den Steg dieses Profilteils (31) definierte innere Volumen gebildet ist/sind.

11. Gewächshaus (1) nach einem der vorstehenden Ansprüche, **dadurch gekennzeichnet, dass** der Durchgang bzw. die Durchgänge (30c) mit einem porösen Element (4) ausgestattet ist/sind, das den Durchtritt von Wasser, Luft und Wasserdampf ermöglicht, aber ein Hindernis für das Durchdringen von Insekten bildet.

12. Gewächshaus nach den Ansprüchen 10 und 11 zusammengenommen, **dadurch gekennzeichnet, dass** das poröse Element in das durch die Flügel und den Steg des ersten Profilteils definierte innere Volumen eingeführt wird.

13. Gewächshaus (1) nach einem der vorstehenden Ansprüche, umfassend mehrere Tunnel (1a), zwischen denen Rinnen (6) angeordnet sind, welche zwei seitliche Flügel aufweisen, **dadurch gekennzeichnet, dass** mindestens einer der seitlichen Flügel jeder Rinne (6) ein Langbauteil (3) zur Aufrechterhaltung der Planenspannung befestigend aufnimmt.

14. Gewächshaus (1) nach einem der vorstehenden Ansprüche, umfassend mehrere Tunnel (1a), zwischen denen Rinnen (6) angeordnet sind, welche zwei seitliche Flügel aufweisen, wobei jeder der Tunnel (1a) eine seitliche Lüftungsöffnung aufweist, die in Zusammenhang mit einem Schwingflügel (5) steht, welcher einen an das Gestell des Tunnels angelenkten Rahmen umfasst, der mit der Plane (2) bedeckt und aus am Gestell des Tunnels (1a) angelenkten, gebogenen Querstreben sowie einer horizontalen Endstrebe gebildet ist, die am freien Ende der gebogenen Querstreben befestigt ist, wobei sich der Schwingflügel (5) in geschlossener Position mit der Endstrebe seines Rahmens auf dem entsprechenden seitlichen Flügel der Rinne (6) abstützt, **dadurch gekennzeichnet, dass** eines der Langbauteile (3) zur Befestigung und zur Aufrechterhaltung der Spannung der Plane (2) auf der Endstrebe des Schwingflügels (5) befestigt ist.
